# EUROPEAN PATENT SPECIFICATION

(11) **EP 0 430 396 B1**
(45) Date of publication and mention of the grant of the patent: **08.12.1993**
(21) Application number: 90307819.4
(22) Date of filing: 17.07.1990
(51) Int. Cl.: A21C 11/10, B29C 69/00

(54) **Apparatus for cutting and shaping a spherical body**
Vorrichtung zum Schneiden und Formen eines kugelförmigen Körpers
Appareil de découpage et de façonnage d'un corps sphérique

(30) Priority: 01.12.1989 JP 313654/89
(43) Date of publication of application: 05.06.1991
(73) Proprietor: RHEON AUTOMATIC MACHINERY CO., LTD., Utsunomiya-shi Tochigi-ken (JP)
(72) Inventor: Tashiro, Yasunori, Utsunomiya-shi, Tochigi-ken (JP)
(74) Representative: Leale, Robin George

(56) References cited:
- EP-A- 0 247 826
- DE-C- 272 176
- NL-A- 6 501 749

## Description

This invention is in general concerned with an apparatus for cutting and shaping a spherical body. It is particularly useful for processing a substantially round food product consisting of soft, very sticky material without generating the problems of dough adhesion or clogging as well as of protrusions from a filling.

EP-A-230368 discloses an apparatus for shaping a round body consisting of a dough coating and a filling, which comprises an assembly comprising a plurality of circumferentially disposed members combined to shape a spheroidal body. Each of the members has at least two sliding surfaces, and they are so combined that a sliding surface of one member is slidable on a sliding surface of another member, that the opening is closed and opened by sliding the members, and that the opening is confined by walls consisting of the inwardly exposed part of the sliding surfaces of the members and is of a cross-sectional area, when the opening is fully open, sufficient to pass a cylindrical body passing therethrough.

While shaping a spheroidal body through the assembly of sliding members is effective, particularly in precluding a member from intruding into the body, it has certain disadvantages. Because of the structural conditions of the assembly, the number of slidable members is limited to up to about six, so that only polygonally-shaped products have been obtained. The external appearance of these polygonal products falls far below that of those hand-shaped spherical ones. Further, owing to mechanical and dimensional imperfections in the shape of the slidable members, especially when processing a very sticky, soft material, there was also some difficulty in completely preventing materials from adhering to the cutting part, or in uniformly and neatly shaping a spherical product.

Also known from the prior art is DE-C-272176 which discloses the preamble of claim 1. However the apparatus of this document fails to provide a reliable clean cut through the material.

Accordingly the present invention is characterised in that the tip of one member follows the first curved side surface of an adjacent member while the opening is closed and opened by the pivotal movements of said members, with the first and second curved surfaces of adjacent members abutting each other in the closed position.

In a preferred embodiment, the first and second curved side surfaces are each an arc of a circle with a radius equal to the distance between any pair of adjacent supporting axes or fulcrums, and, when the tip is at the center of the opening, the center of the arc of the first curved side surface is at the same time located at a distance from the axis of one member that is equal to the radius of the circle and at a distance from the center of the opening that is equal to the distance between the axes, and the center of the arc of the second curved side surface is at the same time located at a distance from the axis of the next member that is equal to the radius of the circle and at a distance from the center of the opening that is equal to the distance between the axes.

In another preferred embodiment of the invention, the first curved side surface of each of the members has a uniform thickness that is thick enough to preclude the member from wedging into material except for the area near the tip thereof, where the thickness decreases towards the tip.

Some embodiments of the invention will now be described by way of example and with reference to the accompanying drawings, in which:-
Fig. 1 is a simplified view of a member for forming an enclosure to cut a material passing therethrough,
Fig. 2 is a schematic plan view of the collectively assembled members when the enclosure is closed,
Fig. 3 is a schematic plan view of the assembled members when the enclosure is opened,
Fig. 4 is a schematic plan view of the assembled members of another embodiment, and illustrates a method of driving them,
Fig. 5-8 are schematic cross sections of the material and members showing stepwise the process of cutting a spherical body,
Figs. 9 and 10 are each a schematic partial plan view of the members, and illustrate the effect of the invention in eliminating sticky materials from the cutting members, and
Fig. 11 is a cross section of a member 10, and shows its thickness, which gradually decreases towards its tip.

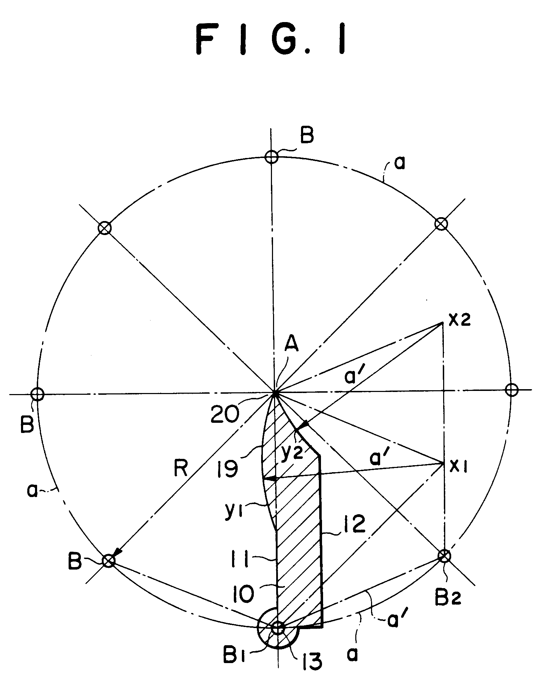

Referring to Fig. 1 a member 10 is shown, a plurality of which constitute the shutter mechanism. Fulcrums B are equidistantly disposed on a circle "a" with a radius R around the center A. At each fulcrum is positioned an axis 13 to which a member is pivotally fitted. The straight line distance between the two adjacent fulcrums B₁ and B₂ is represented by a'.

A curve y₁ is an arc of a circle whose radius is equal to the distance a' and whose center x, is at the same time located at a distance from the fulcrum B₁ that is equal to the radius R and at a distance from the center A that is equal to the distance a'.

A side surface defined by the curve y₁ constitutes the blade part 19 of the member 10 with a tip 20. The blade contacts and cuts a material.

A curve y₂ is an arc of a circle whose radius is equal to the distance a' and whose center x₂ is at the same time located at a distance from the fulcrum B₂ that is equal to the radius R and at a distance from the center A that is equal to the distance a'.

A side surface defined by the curve y₂ is positioned in the rear of the curve y₁ and limits the width of the blade 19 at the tip thereof.

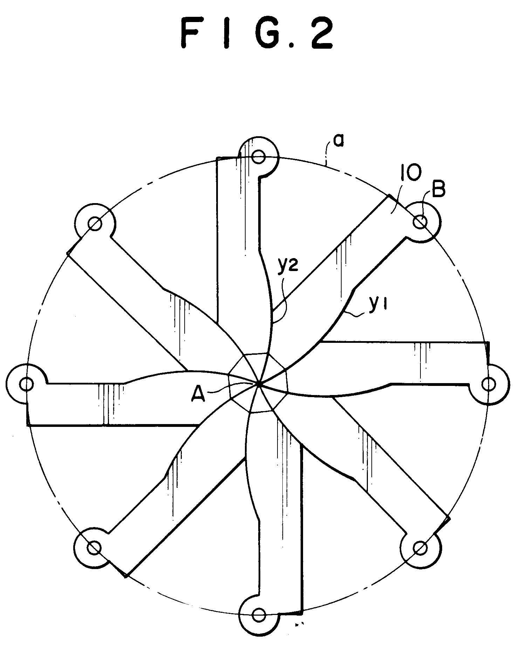

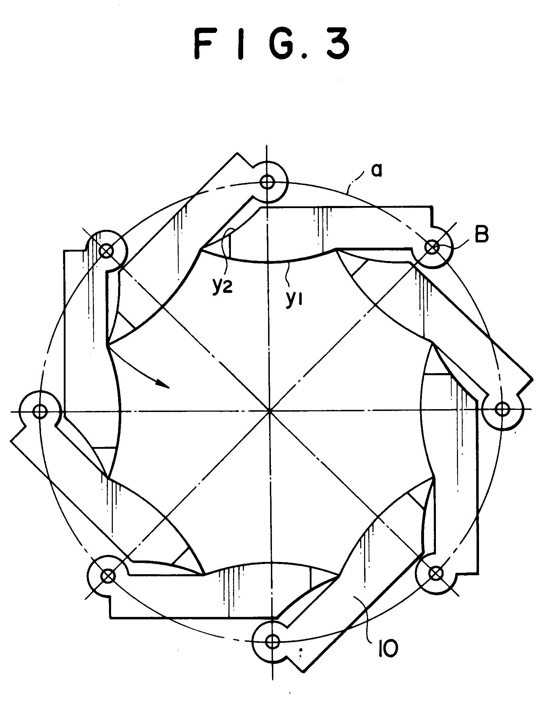

Side surfaces 11 and 12 constituting the neck of the member 10 are formed such that there is no interference among any adjacent members during the course of the rotation shown in Figs. 2 and 3. The axis 13 to be fitted to the fulcrum B₁ is located at the end of the neck.

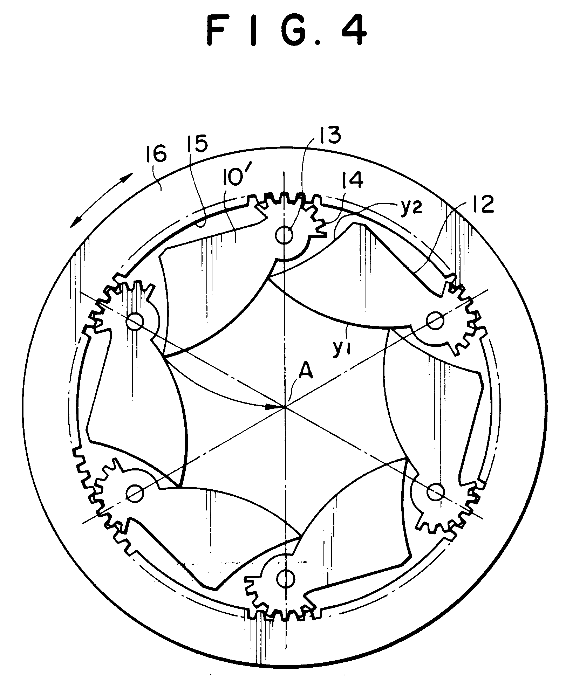

In Fig. 4 showing another embodiment of this invention, the members 10' are simultaneously rotated about axes 13 through a gear or pin mechanism without any mutual interference therebetween. A pinion 14 formed on each member 10' and pivoted to the axis 13 rotates the members 10' by engagement with an internal gear 15, formed on a surrounding frame 16. The members 10' are simultaneously rotated to open and close a central enclosure formed around the center A via the pinions 14 driven by the rotation of the frame 16.

Since the members 10 are free from mutual interference, the restriction on the number of them that can be mounted on a frame is reduced so that, by mounting a number of members up to 24 or more on the frame, a product that is almost a sphere can be formed.

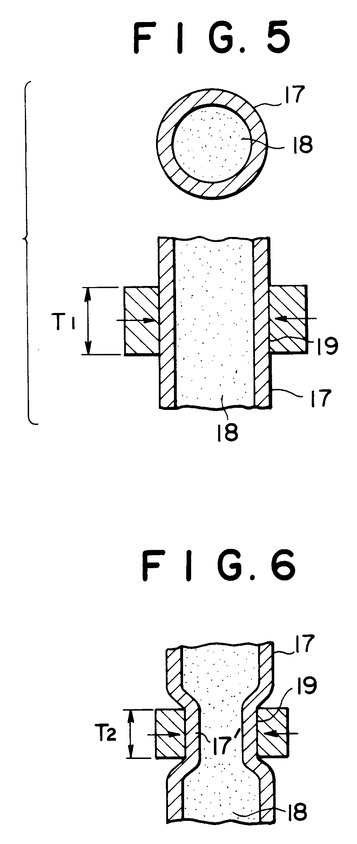

The cutting functions and effects of the apparatus of this invention will now be described by referring to Figs. 5-11.

In the upper part of Fig. 5 is shown a cross section of a continuous bar of a material consisting of a crust or casing 17 consisting of dough with a filling 18 therein. In the lower part of Fig.5 the continuous bar is held in the opening formed by the polygonal members. The continuous bar is in contact with the blades 19 of the curved surface y₁ having a uniform thickness T₁.

The blade 19 of each member has a uniform thickness that is thick enough to prevent the member from wedging into the crust except for its tip area, where the thickness decreases towards the tip 20.

As the members swing towards the center of the frame, the blades come closer to the center to narrow the opening and thus restrict the continuous bar. Due to the structure of the blades, the thickness of the blades where they contact the continuous bar is reduced from T₁ to T₄ (Fig. 11). In Fig. 6 an intermediate thickness of the blades is T₂ when the continuous bar is constricted in a state as shown by the position of its crust 17'.

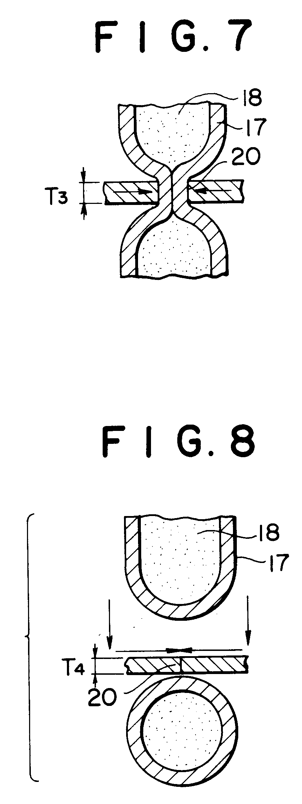

Fig. 7 shows a state wherein the continuous bar is further constricted so that the crust forms a neck therein. In this state, the thickness T₃ is much smaller than T₂ and is close to that of T₄, the thickness of the tip. The improved shutter mechanism, which is based on the principle of rheology, enables the apparatus to press the filling 18 aside into the upper and lower parts of the bar while the crust part in the neck maintains its continuity both in the upper and lower parts of the bar at the time of separation.

As shown in Fig.8, when the polygonal members close the opening, with the tip of T₄ being abutted, a spherical product is completed. Usually a tray (not shown) is provided underneath the apparatus and receives the spherical product.

In short, while the thickness of the surfaces T₁ of the blade 19 gradually decreases from T₁ to T₂, T₃ and T₄, they urge the sides of the crust toward the cutting position so that the crust is finally and perfectly cut by each of the blades 19 at the tip 20. In the above-mentioned cutting process, the continuous bar consists of the crust 17 and the filling 18. However, the bar can be single-layered.

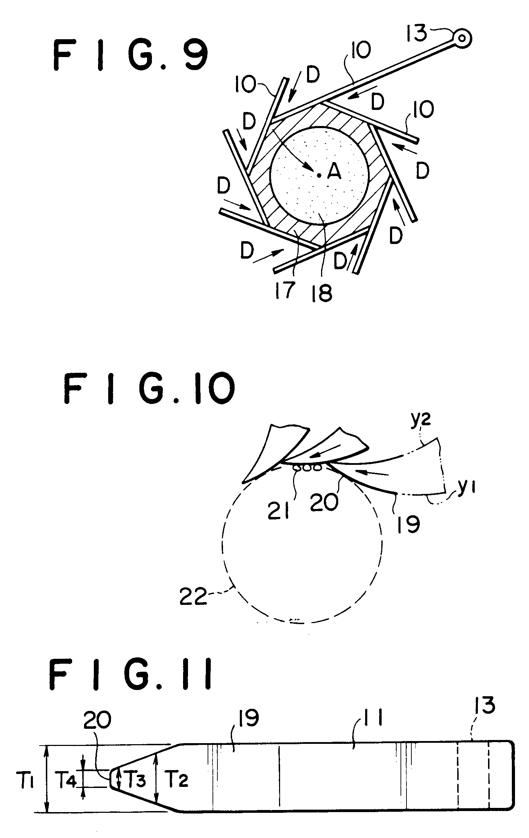

Referring to Figs. 9 and 10, when the enclosure is closing, every member 10 is, as already detailed, driven via the axis 13, so that a forward swing results, and the tip 20 of each polygonal member 10 tracks the curve y₁, formed along a dotted circle 22 around the centre A, in a scraping way in the direction indicated by arrows D. Since, as a result of the above-mentioned tracking movement, material 21 that has adhered to one blade surface is scraped off by an adjacent blade, the assembly enables the cutting and shaping process to be continued without generating any difficulty caused by such adhering materials, even when processing very sticky, soft materials. The invention provides a new and improved apparatus for cutting and shaping very sticky cake-like materials to obtain substantially spherical products free from any impediments caused by adhesion, and without the use of any special parting agents or powdering.

Thus, it will be seen that there is provided an improved apparatus for cutting and shaping a spherical body using a new shutter or iris mechanism comprising a number of rotatable members. The apparatus completely precludes coatings or fillings from adhering to the cutting members through specially configured members.

## Claims

1. An apparatus for cutting and shaping a spherical material, comprising an assembly consisting of a plurality of members (10), each said member being pivotally mounted to a respective supporting axis (13), said axes (13) being equidistantly disposed on a circle (a), said members (10) forming an opening at the center (A) thereof, wherein each of said members (10) has first and second curved side surfaces (y₁, y₂) that meet at the tip of said member (10) positioned remote from said supporting axis (13), said members being arranged such that the opening is confined by the exposed part of the first curved surfaces (y₁) of the members (10) to cut and shape material passing through the opening, characterised in that the tip (20) of one member (10) follows the first curved side surface (y₁) of an adjacent member (10) while the opening is closed and opened by the pivotal movements of said members (10), with the first and second curved surfaces (y₁, y₂) of adjacent members abutting each other in the closed position.

2. Apparatus according to claim 1, wherein the first and second curved side surfaces (y₁, y₂) are each an arc of a circle with a radius equal to the distance (a') between any pair of adjacent supporting axes (B₁, B₂), and when the tip (20) is at the center (A) of the opening the center (x₁) of the arc of the first curved side surface (y₁) is at the same time located at a distance from the axis (B₁) of one member that is equal to the radius (R) of the circle (a) and at a distance from the center (A) of the opening that is equal to the radius of curvature of said first curved side surface (a'), and the center (x₂) of the arc of the second curved side surface (y₂) is at the same time located at a distance from the axis (B₂) of the next member (10) that is equal to the radius (R) of the circle (a) and at a distance from the center (A) of the opening that is equal to the radius of curvature of said second curved side surface (a').

3. Apparatus according to claim 2, wherein the first curved side surface (y₁) of each of the members (10) has a uniform thickness that is thick enough to preclude the member from wedging into the material except for the area near the tip (20) thereof, where the thickness decreases towards the tip (20),

## Patentansprüche

1. Vorrichtung zum Schneiden und Formen eines kugelförmigen Materials, umfassend ein Gebilde bestehend aus einer Mehrzahl von Gliedern (10), von denen jedes an einer betreffenden Tragachse (13) schwenkbar angebracht ist und die Achsen (13) auf einem Kreis (a) in gleichen Abständen angeordnet sind, wobei die Glieder (10) eine Öffnung an der Mitte (A) des Kreises bilden und jedes der Glieder (10) eine erste und eine zweite gekrümmte Seitenfläche (y₁, y₂) hat, die sich an der Spitze des Gliedes (10) treffen, welche von der Tragachse (13) entfernt liegt, und wobei die Glieder derart angeordnet sind, daß die Öffnung durch den freiliegenden Teil der ersten gekrümmten Flächen (y₁) der Glieder (10) umgrenzt ist, um Material zu schneiden und zu formen, welches durch die Öffnung hindurchgeht,
dadurch gekennzeichnet, daß die Spitze (20) eines Gliedes (10) der ersten gekrümmten Seitenfläche (y₁) eines benachbarten Gliedes (10) folgt, während die Öffnung durch die Schwenkbewegungen der Glieder (10) geschlossen und geöffnet wird, wobei die erste und die zweite gekrümmte Fläche (y₁, y₂) benachbarter Glieder in der geschlossenen Position aneinander anliegen.

2. Vorrichtung nach Anspruch 1, wobei die erste und die zweite gekrümmte Seitenfläche (y₁, y₂) jeweils an einem Kreisbogen mit einem Radius gleich dem Abstand (a') zwischen irgendeinem Paar benachbarter Tragachsen (B₁, B₂) liegen, und wenn die Spitze (20) an der Mitte (A) der Öffnung liegt, die Mitte (x₁) des Bogens der ersten gekrümmten Seitenfläche (y₁) gleichzeitig in einem Abstand von der Achse (B₁) eines Gliedes, der gleich dem Radius (R) des Kreises (a) ist, und in einem Abstand von der Mitte (A) der Öffnung liegt, der gleich dem Krümmungsradius der ersten gekrümmten Seitenfläche (a') ist, und die Mitte (x₂) des Bogens der zweiten gekrümmten Seitenfläche (y₂) gleichzeitig in einem Abstand von der Achse (B₂) des nächsten Gliedes (10), der gleich dem Radius (R) des Kreises (a) ist, und in einem Abstand von der Mitte (A) der Öffnung liegt, der gleich dem Krümmungsradius der zweiten gekrümmten Seitenfläche (a') ist.

3. Vorrichtung nach Anspruch 2, wobei die erste gekrümmte Seitenfläche (y₁) jedes der Glieder (10) gleichmäßige Dicke hat, die dick genug ist, um auszuschließen, daß das Glied sich in das Material einkeilt mit der Ausnahme in dem Bereich nahe der Spitze (20) des Gliedes, wo die Dicke sich in Richtung gegen die Spitze (20) verringert.

## Revendications

1. Appareil pour découper et façonner une matière sphérique, comportant un ensemble constitué de plusieurs éléments (10), chacun desdits éléments étant monté de façon pivotante sur un axe respectif (13) de support, lesdits axes (13) étant disposés de façon équidistante sur un cercle (a), lesdits éléments (10) formant une ouverture en leur centre (A), chacun desdits éléments (10) présentant des première et seconde surfaces latérales incurvées (y₁, y₂) qui se rejoignent au bout dudit élément (10) éloigné desdits axes (13) de support, lesdits éléments étant disposés de manière que l'ouverture soit délimitée par la partie à découvert des premières surfaces incurvées (y₁) des éléments (10) pour découper et façonner une matière passant dans l'ouverture, caractérisé en ce que le bout (20) d'un élément (10) suit la première surface latérale incurvée (y₁) d'un élément adjacent (10) tandis que l'ouverture est fermée et ouverte par les mouvements de pivotement desdits éléments (10), les première et seconde surfaces incurvées (y₁, y₂) d'éléments adjacents étant en butée entre elles dans la position fermée.

2. Appareil selon la revendication 1, dans lequel les première et seconde surfaces latérales incurvées (y₁, y₂) suivent chacune un arc d'un cercle d'un rayon égal à la distance (a') entre une paire quelconque d'axes adjacents (B₁, B₂) de support, et lorsque le bout (20) se trouve au centre (A) de l'ouverture, le centre (x₁) de l'arc de la première surface latérale incurvée (y₁) est en même temps placé à une distance de l'axe (B₁) d'un élément qui est égale au rayon (R) du cercle (a) et à une distance du centre (A) de l'ouverture qui est égale au rayon de courbure de ladite première surface latérale incurvée (a'), et le centre (x₂) de l'arc de la seconde surface latérale incurvée (y₂) est au même moment placé à une distance de l'axe (B₂) de l'élément suivant (10) qui est égale au rayon (R) du cercle (a) et à une distance du centre (A) de l'ouverture qui est égale au rayon de courbure de ladite seconde surface latérale incurvée (a').

3. Appareil selon la revendication 2, dans lequel la première surface latérale incurvée (y₁) de chacun des éléments (10) présente une épaisseur uniforme qui est suffisante pour empêcher l'élément de s'enfoncer à la manière d'un coin dans la matière sauf dans la zone proche du bout (20) de l'élément, où l'épaisseur diminue vers le bout (20).
